# EUROPEAN PATENT APPLICATION

(11) **EP 4 425 312 A1**
(43) Date of publication of application: **04.09.2024**
(21) Application number: 22885937.7
(22) Date of filing: 25.10.2022
(51) Int. Cl.: G06F 3/0481

(54) **WALLPAPER INTERACTION METHOD AND APPARATUS, AND ELECTRONIC DEVICE**

(30) Priority: 26.10.2021 CN 202111245881
(71) Applicant: Vivo Mobile Communication Co., Ltd., Dongguan, Guangdong 523863 (CN)
(72) Inventor: AI, Min, Dongguan, Guangdong 523863 (CN); ZHOU, Yi, Dongguan, Guangdong 523863 (CN); HU, Jinwei, Dongguan, Guangdong 523863 (CN)
(74) Representative: Lavoix
(86) International application number: PCT/CN2022/127344
(87) International publication number: WO 2023/072060

(57) **Abstract**

This application discloses a wallpaper interaction method and apparatus, and an electronic device, and pertains to the field of communications technologies. The wallpaper interaction method includes: displaying a target wallpaper, where the target wallpaper includes a target element, and the target element is in a first shape; receiving a first input; and in response to the first input, enabling a first function, and updating a shape of the target element with a second shape corresponding to the first function

## Description

### CROSS-REFERENCE TO RELATED APPLICATIONS

This application claims priority to Chinese Patent Application No. 202111245881 .X filed in China on October 26, 2021, which is incorporated herein by reference in its entirety.

### TECHNICAL FIELD

This application pertains to the field of communications technologies, and in particular, to a wallpaper interaction method and apparatus, and an electronic device.

### BACKGROUND

With the development of electronic devices, the electronic device can achieve more and more functions. At present, the desktop wallpaper of the electronic device generally includes a static wallpaper and a dynamic wallpaper.

Generally, the dynamic wallpaper is drawn based on a configuration file corresponding to the dynamic wallpaper and texture data corresponding to multi-frame images. However, the static wallpaper corresponds to a specific display screen, while the dynamic wallpaper corresponds to a specific dynamic effect, both of which cannot bring more interactive experience to users.

### SUMMARY

Embodiments of this application are intended to provide a wallpaper interaction method and apparatus, and an electronic device, to resolve a problem that users cannot interact with wallpapers in related technologies.

According to a first aspect, an embodiment of this application provides a wallpaper interaction method, including:
displaying a target wallpaper, where the target wallpaper includes a target element, and the target element is in a first shape;
receiving a first input; and
in response to the first input, enabling a first function, and updating a shape of the target element with a second shape corresponding to the first function.

According to a second aspect, an embodiment of this application provides a wallpaper interaction apparatus, including:
a display module, configured to display a target wallpaper, where the target wallpaper includes a target element, and the target element is in a first shape;
a first receiving module, configured to receive a first input; and
a first response module, configured to: in response to the first input, enable a first function, and update a shape of the target element with a second shape corresponding to the first function.

According to a third aspect, an embodiment of this application provides an electronic device. The electronic device includes a processor, a memory, and a program or an instruction stored in the memory and executable on the processor, where the program or the instruction is executed by the processor to implement steps of the method according to the first aspect.

According to a fourth aspect, an embodiment of this application provides a readable storage medium. The readable storage medium stores a program or an instruction, and when the program or the instruction is executed by a processor, steps of the method according to the first aspect are implemented.

According to a fifth aspect, an embodiment of this application provides a chip. The chip includes a processor and a communications interface, the communications interface is coupled to the processor, and the processor is configured to run a program or an instruction to implement the method according to the first aspect.

According to a sixth aspect, an embodiment of this application provides a computer program product. The computer program product is stored in a non-transitory storage medium, and the computer program product is executed by at least one processor to implement the method according to the first aspect.

In this embodiment of this application, after the electronic device enables the first function in response to the first input of the user, the shape of the target element on the target wallpaper is updated from the first shape to the second shape corresponding to the first function, so that the target element included in the target wallpaper can display different dynamic effects based on different inputs of the user. This can not only achieve a dynamic picture display effect, but also realize the interaction between the wallpaper and the user, which can bring more interactive experience to the user.

### BRIEF DESCRIPTION OF DRAWINGS

FIG. 1 is a flowchart of steps of a wallpaper interaction method according to an embodiment of this application;
FIG. 2 is a schematic diagram of one display of an electronic device in a wallpaper interaction method according to an embodiment of this application;
FIG. 3 is a schematic diagram of another display of an electronic device in a wallpaper interaction method according to an embodiment of this application;
FIG. 4 is a schematic diagram of a structure of a wallpaper interaction apparatus according to an embodiment of this application;
FIG. 5 is a first schematic diagram of a structure of an electronic device according to an embodiment of this application; and
FIG. 6 is a second schematic diagram of a structure of an electronic device according to an embodiment of this application.

### DESCRIPTION OF EMBODIMENTS

The following clearly describes the technical solutions in the embodiments of this application with reference to the accompanying drawings in the embodiments of this application. Apparently, the described embodiments are some but not all of the embodiments of this application. All other embodiments obtained by a person of ordinary skill in the art based on the embodiments of this application shall fall within the protection scope of this application.

The terms "first", "second", and the like in this specification and claims of this application are used to distinguish between similar objects instead of describing a specific order or sequence. It should be understood that data used in such a way are interchangeable in proper circumstances, so that the embodiments of this application can be implemented in an order other than the order illustrated or described herein. Objects classified by "first", "second", and the like are usually of a same type, and the number of objects is not limited. For example, there may be one or more first objects. In addition, in this specification and the claims, "and/or" represents at least one of connected objects, and a character "/" generally represents an "or" relationship between associated objects.

With reference to the accompanying drawings, a wallpaper interaction method and apparatus, and an electronic device provided in the embodiments of this application are described in detail by using specific embodiments and application scenes thereof.

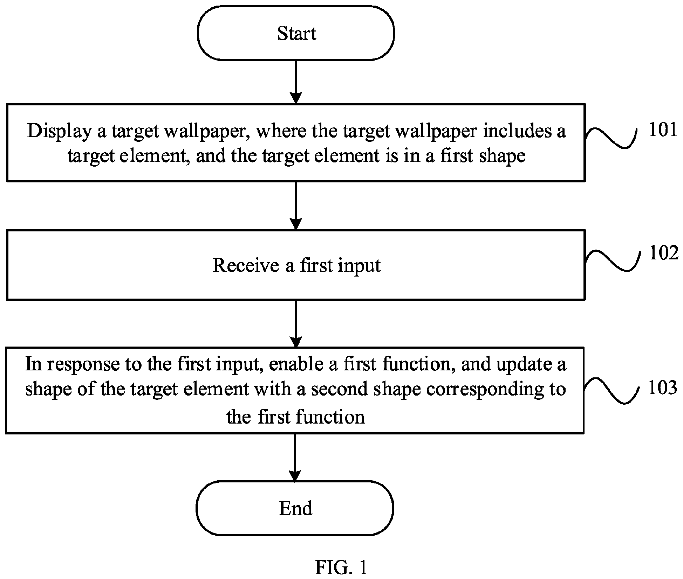

As shown in FIG. 1, an embodiment of this application provides a wallpaper interaction method, including the following steps.

Step 101. Display a target wallpaper, where the target wallpaper includes a target element, and the target element is in a first shape.

In this step, the target wallpaper can be a common dynamic wallpaper or a dynamic wallpaper based on a game scene and combined with the game. The dynamic wallpaper based on the game scene and combined with the game can also be referred to as a behavior wallpaper.

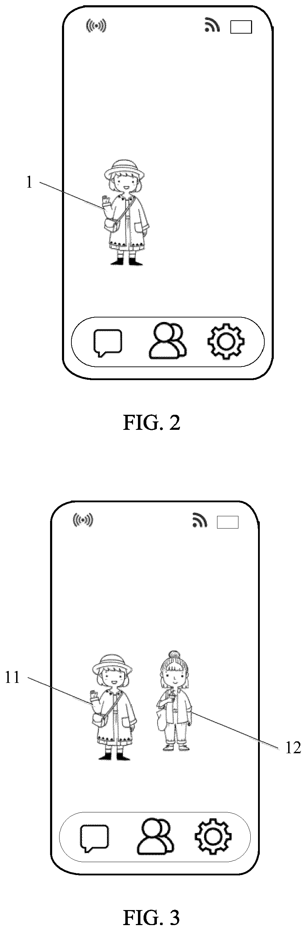

Optionally, in this embodiment of this application, the target element can be a character element. As shown in FIG. 2, the target wallpaper includes a target element 1. Alternatively, the target element can also be an animal element or a plant element, which is not specifically limited herein. For example, when the target wallpaper is a dynamic wallpaper based on the game scene, the target element can be a game character in a corresponding game scene, or a mount or a pet of the game character, or a dynamically changeable plant in the game scene.

Step 102. Receive a first input.

In this step, the first input may be an input for the target element, an input for any application of the electronic device, or an input for any area of the screen of the electronic device, which is not specifically limited herein.

Step 103. In response to the first input, enable a first function, and update a shape of the target element with a second shape corresponding to the first function.

In other words, after the electronic device enables the first function in response to the first input, a shape of the target element on the target wallpaper is updated from the first shape to the second shape, where the second shape corresponds to the first function.

In this embodiment of this application, after the electronic device enables the first function in response to the first input of the user, the shape of the target element on the target wallpaper is updated from the first shape to the second shape corresponding to the first function, so that the target element included in the target wallpaper can display different dynamic effects based on different inputs of the user. This can not only achieve a dynamic picture display effect, but also realize the interaction between the wallpaper and the user, which can bring more interactive experience to the user.

For example, if the first function is to preview a dress-up of the target element, the updating the shape of the target element with the second shape refers to that the target element is displayed in a dress-up corresponding a dress-up preview input.

For another example, if the first function is to start an application of "Origin Walkman" and play music, the updating the shape of the target element with the second shape refers to that the target element performs a dancing action within first duration.

For another example, if the first function is to take photos or screenshots and save the pictures, the updating the shape of the target element with the second shape refers to that the target element performs an action of receiving dropped pictures and storing the pictures in the pocket within second duration.

For another example, if the first function is running the current call in the background, the updating the shape of the target element with the second shape refers to displaying an acoustic wave-like dynamic effect on the target element within third duration.

For another example, if the first function is to start an instant chat tool (such as WeChat, SMS, or the like), the updating the shape of the target element with the second shape refers to displaying a dialog box above the head of the target element within fourth duration.

In at least one embodiment of this application, step 103 includes:
in a case that the first input is an input for the target element, starting an application function associated with the target element in response to the first input.

For example, the first input is touching and holding any part or specific part of the target element, or a double tap on any part or specific part of the target element, which is not specifically limited herein.

For another example, starting the application function associated with the target element includes at least one of the following:
turning on "Origin Walkman" in the background and starting playing music;
cleaning up the background;
turning Wi-Fi on or off;
turning Bluetooth on or off; and
turning up or down the sound.

As an optional embodiment, if the target element is associated with an application function, the first input is an input for any position of the target element, and the application function associated with the target element is directly started in response to the first input.

As another optional embodiment, if the target element is associated with at least two application functions, one manner that can be used in this embodiment of this application is: different parts of the target element are associated with different application functions. For example, if the head of the target element is associated with "Origin Walkman", "Origin Walkman" associated with the head is started when the first input is an input for the head of the target element. For another example, if the leg of the target element is associated with a Wi-Fi switch, the Wi-Fi associated with the leg is turned on or off when the first input is an input for the leg of the target element. Another manner that can be used in this embodiment of this application is: different application functions are associated with different inputs for the target element. For example, double-tap any position on the target element to start "Origin Walkman". For another example, tap any position on the target element to turn Bluetooth on or off. For another example, touch and hold any position of the target element to clean up the application running in the background. This is not enumerated herein.

In at least one optional embodiment of this application, in a case that the target element includes a first element and a second element, the first element is associated with a first account, and the second element is associated with a second account, after the displaying a target wallpaper, the method further includes:
receiving a second input for the first element; and
in response to the second input, sending a first instruction to the second account through the first account, where the first instruction is used to instruct an electronic device corresponding to the second account to receive a target message or to instruct a shape of an element displayed on the wallpaper of the electronic device to be updated with a target shape.

For example, as shown in FIG. 3, the target wallpaper of the electronic device includes a first element 11 and a second element 12, the first element 11 is associated with a first account, and the second element 12 is associated with a second account.

Optionally, the second input is touching and holding any part or specific part of the first element, or a double tap on any part or specific part of the first element, which is not specifically limited herein. In response to the second input, a first instruction is sent to the second account. Optionally, when a user corresponding to the second account unlocks a screen of the electronic device next time, the user receives the corresponding first instruction and performs updating correspondingly based on the first instruction.

Optionally, after the electronic device sends prompt information to an electronic device corresponding to a second character element on the wallpaper, a peer electronic device receives the corresponding prompt information when unlocking the screen next time.

For example, if the user touches and holds the first element, a calling sound can be sent to the second account, and an acoustic wave-like dynamic effect may appear. Then when unlocking the screen next time, the user corresponding to the second account will receive the sound sent from the first account and play the sound, and update the element displayed on the wallpaper of the electronic device corresponding to the second account with showing the acoustic wave-like dynamic effect.

Optionally, in a case that the target wallpaper is the dynamic wallpaper based on the game scene and combined with the game, the first element is a game character of the user of the electronic device, and the first element is associated with the first account. Optionally, in addition to the first element, the target wallpaper may further include at least one second element, the second element is a game character of another user, and the second element is associated with the second account.

Optionally, in a case that the target element includes the first element and at least one second element, another user corresponding to the second element is in a game buddy relationship with the user of the electronic device. Further, optionally, an operation of setting the second element in the wallpaper needs to be authorized by the user of the second account associated with the second element. For example, if the first user and the second user authorize each other to display their own game characters in each other's wallpaper, the target wallpaper of the electronic device of the first user can display the game character thereof and the game character of the second user. Similarly, the target wallpaper of the electronic device of the second user can also display the game character thereof and the game character of the first user.

As an optional embodiment, when the target wallpaper is initially displayed, a dress-up of the target element on the wallpaper may be the same as that of the element in the game scene.

In at least one optional embodiment of this application, in a case that the target element includes the first element and the second element, the first element is associated with the first account, and the second element is associated with the second account, the first function further includes previewing an interaction action between the first element and the second element. Correspondingly, the updating the shape of the target element with a second shape corresponding to the first function includes: performing, by the first element and the second element, an interaction action corresponding to the interaction action preview.

In at least one optional embodiment of this application, the target element is in the first shape in a case that a screen is in a first state, and the target element is in the second shape in a case that the screen is in a second state.

Optionally, step 103 includes:
in response to the first input, changing a screen state to the second state, and updating the shape of the target element with the second shape.

The first state of the screen is a locked state or is referred to as a not unlocked state. In this case, the target element is in the first shape, for example, the first shape is the target element standing with the fist holding in the other hand. Correspondingly, the second state of the screen is an unlocked state. In this case, the shape of the target element is updated with the second shape, for example, the second shape is the target element standing relaxed.

For example, when the screen is in the locked state, the target element is standing with the fist holding in the other hand. In this case, tapping the target element can unlock with the face, fingerprint, or password, and after unlocking, the target element is updated to standing relaxed.

Further, in response to the first input, after the enabling a first function, and updating a shape of the target element with a second shape, the method further includes:
receiving a third input; and
in response to the third input, changing the screen state to the first state, and updating the shape of the target element with the first shape.

The second state of the screen is the unlocked state. In this case, the target element is in the second shape, for example, the second shape is the target element standing relaxed. Correspondingly, the first state of the screen is the locked state or is referred to as the not unlocked state. In this case, the shape of the target element is updated with the first shape, for example, the first shape is the target element standing with the fist holding in the other hand.

For example, when the screen is in the unlocked state, slightly tap the target element standing relaxed, the electronic device will return to the locked state, and the target element will be updated to standing with the fist holding in the other hand.

As an optional embodiment, when the screen is locked, the target element can appear in the lower left corner of the screen of the electronic device by default, and when the user taps interaction areas in different positions, the target element can move to different positions for corresponding unlocking interaction. For example, the screen of the electronic device can be divided into: a face unlocking interaction area, a lock pendant area, a notification area, a password unlocking interaction area, a fingerprint unlocking interaction area, a shortcut key area, and the like. If the user taps the password unlocking interaction area, the target element can move to the password unlocking area, and further, the user can slightly tap the target element to perform a password unlocking operation.

Optionally, in a case that the first function is to preview the dress-up of the target element, the method further includes:
receiving a gesture input for enlarging the target element; and
in response to the gesture input for enlarging, displaying a specific close-up mode on the desktop of the electronic device, where in this mode, all desktop icons are hidden, only a screen where the target element is located is reserved, which can also be referred to as that the desktop of the electronic device only displays a corresponding wallpaper.

In this close-up mode, the user can tap the dress-up preview, and then the electronic device receives a dress-up preview input for the target element. After confirming the selection and tapping the application, the dress-up preview will take effect and return to the desktop. In this case, the target element is in an updated dress-up state.

Optionally, in a case that the target element includes the first element and the second element, and the first function includes previewing the interaction action between the first element and the second element, a specific flow is as follows: the user taps on the action preview, and after selecting the interaction action, the user taps the application for taking effect and returning to the desktop, the first element executes the interaction action corresponding to the interaction action preview input, that is, the first element and the second element in the target wallpaper make the corresponding action.

In a case that the first function includes previewing the interaction action between the first element and the second element, the method further includes:
sending interaction action information to a second account corresponding to the second element. Optionally, the electronic device corresponding to the second account receives, when the screen is woken up or unlocked next time, the interaction action information sent from the first account. Accordingly, the first element and the second element on the target wallpaper of the electronic device corresponding to the second account make the corresponding action. In other words, the action preview of the first element and the second element can appear on the electronic device corresponding to the first account and the electronic device corresponding to the second account, so as to enhance the interaction between the user of the first account and the user of the second account, and increase the fun of interaction.

In an optional embodiment of this application, if the user slides the screen left and right when the electronic device is in a standby state, the target wallpaper dynamically displays different perspectives of the target element in the current scene.

Optionally, if the first function is to start "Origin Walkman" and play music, the updating the shape of the target element with the second shape refers to that the target element performs a dancing action within first duration. For example, after the user taps "Origin Walkman", the target element on the target wallpaper will dance for 2 seconds.

Optionally, if the first function is to take photos or screenshots and save the pictures, the updating the shape of the target element with the second shape refers to that the target element performs an action of receiving dropped pictures and storing the pictures in the pocket within second duration. For example, if the user returns to the desktop after taking a photo or taking a screenshot, a picture will fall from the top of the target wallpaper, and the target element will receive the picture and store the picture in the pocket, which lasts for 2 seconds.

Optionally, if the first function is running the current call in the background, the updating the shape of the target element with the second shape refers to displaying an acoustic wave-like dynamic effect on the target element within third duration. For example, after calling in the background and returning to the desktop, there will be a sound wave effect on the head of the target element, which lasts for 2 seconds.

Optionally, if the first function is to start an instant chat tool (such as WeChat, SMS, or the like), the updating the shape of the target element with the second shape refers to displaying a dialog box above the head of the target element within fourth duration. For example, after the user returns to the desktop after using SMS or WeChat, a dialog box will appear on the head of the target element, which lasts for 2 seconds.

In conclusion, in this embodiment of this application, after the electronic device enables the first function in response to the first input of the user, the shape of the target element on the target wallpaper is updated from the first shape to the second shape corresponding to the first function, so that the target element included in the target wallpaper can display different dynamic effects based on different inputs of the user. This can not only achieve a dynamic picture display effect, but also realize the interaction between the wallpaper and the user, which can bring more interactive experience to the user.

It should be noted that the wallpaper interaction method provided in the embodiments of this application may be performed by a wallpaper interaction apparatus, or a control module that is in the wallpaper interaction apparatus and that is configured to perform the wallpaper interaction method. In this embodiment of this application, the wallpaper interaction apparatus provided in the embodiments of this application is described by using an example in which the wallpaper interaction method is performed by a wallpaper interaction apparatus.

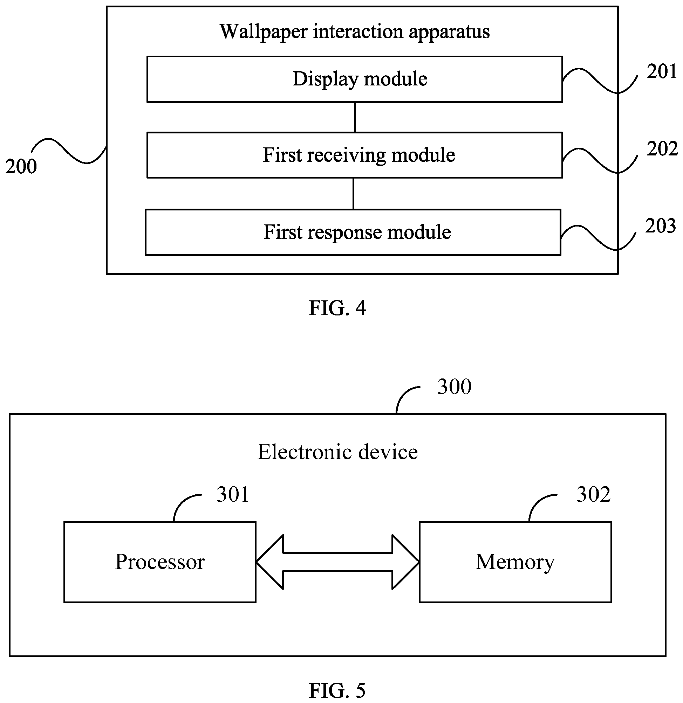

As shown in FIG. 4, an embodiment of this application also provides a wallpaper interaction apparatus 200, including:
a display module 201, configured to display a target wallpaper, where the target wallpaper includes a target element, and the target element is in a first shape;
a first receiving module 202, configured to receive a first input; and
a first response module 203, configured to: in response to the first input, enable a first function, and update a shape of the target element with a second shape corresponding to the first function.

In an optional embodiment, the first response module includes:
a first response submodule, configured to: in a case that the first input is an input for the target element, start an application function associated with the target element in response to the first input.

In an optional embodiment, in a case that the target element includes a first element and a second element, the first element is associated with a first account, and the second element is associated with a second account, the apparatus further includes:
a second receiving module, configured to receive a second input for the first element; and
a second response module, configured to: in response to the second input, send a first instruction to the second account through the first account, where the first instruction is used to instruct an electronic device corresponding to the second account to receive a target message or to instruct a shape of an element displayed on the wallpaper of the electronic device to be updated with a target shape.

In an optional embodiment, the target element is in the first shape in a case that a screen is in a first state, and the target element is in the second shape in a case that the screen is in a second state; and the first response module includes:
a second response submodule, configured to: in response to the first input, change a screen state to the second state, and update the shape of the target element with the second shape.

In an optional embodiment, the apparatus further includes:
a third receiving module, configured to receive a third input; and
a third response module, configured to: in response to the third input, change the screen state to the first state, and update the shape of the target element with the first shape.

In this embodiment of this application, after the electronic device enables the first function in response to the first input of the user, the shape of the target element on the target wallpaper is updated from the first shape to the second shape corresponding to the first function, so that the target element included in the target wallpaper can display different dynamic effects based on different inputs of the user. This can not only achieve a dynamic picture display effect, but also realize the interaction between the wallpaper and the user, which can bring more interactive experience to the user.

It should be noted that the wallpaper interaction apparatus provided in the embodiments of this application is an apparatus that can perform the foregoing wallpaper interaction method. Therefore, all embodiments of the foregoing wallpaper interaction method are applicable to the apparatus, and a same or similar beneficial effect can be achieved.

The wallpaper interaction apparatus in this embodiment of this application may be an apparatus, or may be a component, an integrated circuit, or a chip in a terminal. The apparatus may be a mobile electronic device, or may be a non-mobile electronic device. For example, the mobile electronic device may be a mobile phone, a tablet computer, a laptop computer, a palmtop computer, an in-vehicle electronic device, a wearable device, an ultra-mobile personal computer (ultra-mobile personal computer, UMPC), a netbook, or a personal digital assistant (personal digital assistant, PDA). The non-mobile electronic device may be a server, a network attached storage (Network Attached Storage, NAS), a personal computer (personal computer, PC), a television (television, TV), a teller machine, or a self-service machine. This is not specifically limited in the embodiments of this application.

The wallpaper interaction apparatus in this embodiment of this application may be an apparatus with an operating system. The operating system may be an Android (Android) operating system, an iOS operating system, or another possible operating system. This is not specifically limited in this embodiment of this application.

The wallpaper interaction apparatus provided in this embodiment of this application can implement processes implemented in the method embodiments of FIG. 1. To avoid repetition, details are not described herein again.

Optionally, as shown in FIG. 5, an embodiment of this application further provides an electronic device 300, including a processor 301, a memory 302, and a program or an instruction stored in the memory 302 and executable on the processor 301. The program or the instruction is executed by the processor 301 to implement the processes of the foregoing wallpaper interaction method embodiment and a same technical effect can be achieved. To avoid repetition, details are not described herein again.

It should be noted that the electronic device in this embodiment of this application includes the foregoing mobile electronic device and the foregoing non-mobile electronic device.

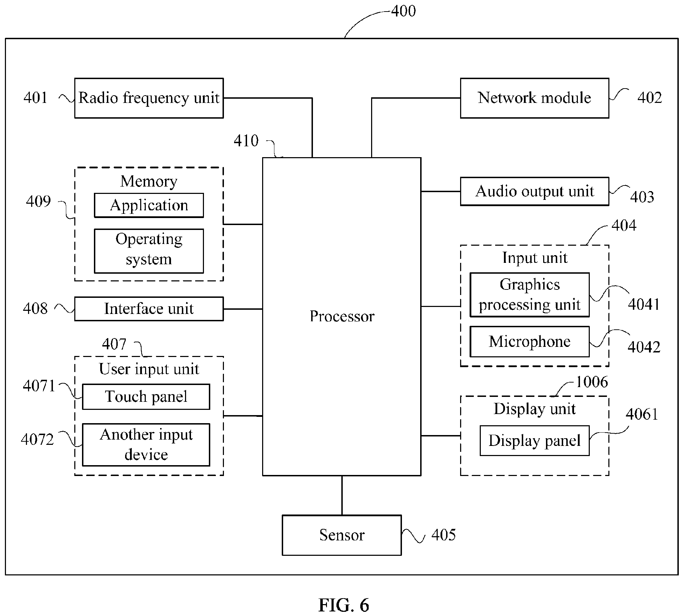

FIG. 6 is a schematic diagram of a hardware structure of an electronic device according to an embodiment of this application.

An electronic device 400 includes but is not limited to components such as a radio frequency unit 401, a network module 402, an audio output unit 403, an input unit 404, a sensor 405, a display unit 406, a user input unit 407, an interface unit 408, a memory 409, and a processor 410.

A person skilled in the art can understand that the electronic device 400 may further include a power supply (such as a battery) that supplies power to each component. The power supply may be logically connected to the processor 410 by using a power supply management system, to implement functions such as charging and discharging management, and power consumption management by using the power supply management system. The structure of the electronic device shown in FIG. 6 does not constitute a limitation on the electronic device. The electronic device may include components more or fewer than those shown in the diagram, a combination of some components, or different component arrangements. Details are not described herein.

The display unit 406 is configured to display a target wallpaper, where the target wallpaper includes a target element, and the target element is in a first shape;
the radio frequency unit 401 is configured to receive a first input; and
the processor 410 is configured to: in response to the first input, enable a first function, and update a shape of the target element with a second shape corresponding to the first function.

In this embodiment of this application, after the electronic device enables the first function in response to the first input of the user, the shape of the target element on the target wallpaper is updated from the first shape to the second shape corresponding to the first function, so that the target element included in the target wallpaper can display different dynamic effects based on different inputs of the user. This can not only achieve a dynamic picture display effect, but also realize the interaction between the wallpaper and the user, which can bring more interactive experience to the user.

In an optional embodiment, the processor 410 is further configured to: in a case that the first input is an input for the target element, start an application function associated with the target element in response to the first input.

In an optional embodiment, in a case that the target element includes a first element and a second element, the first element is associated with a first account, and the second element is associated with a second account, the radio frequency unit 401 is further configured to receive a second input for the first element; and the processor 410 is further configured to: in response to the second input, send a first instruction to the second account through the first account, where the first instruction is used to instruct an electronic device corresponding to the second account to receive a target message or to instruct a shape of an element displayed on the wallpaper of the electronic device to be updated with a target shape.

In an optional embodiment, the target element is in the first shape in a case that a screen is in a first state, and the target element is in the second shape in a case that the screen is in a second state; and the processor 410 is further configured to: in response to the first input, change a screen state to the second state, and update the shape of the target element with the second shape.

In an optional embodiment, in response to the first input, after the enabling a first function, and updating a shape of the target element with a second shape, the radio frequency unit 401 is further configured to receive a third input; and the processor 410 is further configured to: in response to the third input, change the screen state to the first state, and update the shape of the target element with the first shape.

In this embodiment of this application, after the electronic device enables the first function in response to the first input of the user, the shape of the target element on the target wallpaper is updated from the first shape to the second shape corresponding to the first function, so that the target element included in the target wallpaper can display different dynamic effects based on different inputs of the user. This can not only achieve a dynamic picture display effect, but also realize the interaction between the wallpaper and the user, which can bring more interactive experience to the user.

It should be noted that the electronic device provided in this embodiment of this application is an electronic device capable of performing the foregoing wallpaper interaction method, and all embodiments of the foregoing wallpaper interaction method are applicable to the electronic device, and same or similar beneficial effects can be achieved.

It should be understood that, in the embodiments of this application, the input unit 404 may include a graphics processing unit (Graphics Processing Unit, GPU) 4041 and a microphone 4042, and the graphics processing unit 4041 processes image data of a still picture or video obtained by an image capture apparatus (such as a camera) in a video capture mode or an image capture mode. The display unit 406 may include a display panel 4061. Optionally, the display panel 4061 may be configured in a form such as a liquid crystal display or an organic light-emitting diode. The user input unit 407 includes a touch panel 4071 and another input device 4072. The touch panel 4071 is also referred to as a touchscreen. The touch panel 4071 may include two parts: a touch detection apparatus and a touch controller. The another input device 4072 may include but is not limited to a physical keyboard, a functional button (such as a volume control button or a power on/off button), a trackball, a mouse, and a joystick. Details are not described herein. The memory 409 may be configured to store a software program and various data, including but not limited to an application and an operating system. An application processor and a modem processor may be integrated into the processor 410, the application processor mainly processes an operating system, a user interface, an application, and the like, and the modem processor mainly processes wireless communication. It can be understood that, alternatively, the modem processor may not be integrated into the processor 410.

An embodiment of this application further provides a readable storage medium. The readable storage medium may be non-volatile or volatile. The readable storage medium stores a program or an instruction, and the program or the instruction is executed by a processor to implement the processes of the foregoing wallpaper interaction method embodiment, and a same technical effect can be achieved. To avoid repetition, details are not described herein again.

The processor is a processor in the electronic device in the foregoing embodiment. The readable storage medium includes a computer-readable storage medium, such as a computer read-only memory (Read-Only Memory, ROM), a random access memory (Random Access Memory, RAM), a magnetic disk, or an optical disc.

An embodiment of this application further provides a computer program product, the computer program product is stored in a non-transitory storage medium, and the computer program product is executed by at least one processor to implement the processes of the wallpaper interaction method embodiment, and a same technical effect can be achieved. To avoid repetition, details are not described herein again.

An embodiment of this application further provides a chip. The chip includes a processor and a communications interface, the communications interface is coupled to the processor, and the processor is configured to run a program or an instruction to implement the processes of the foregoing wallpaper interaction method embodiment, and a same technical effect can be achieved. To avoid repetition, details are not described herein again.

It should be understood that the chip mentioned in this embodiment of this application may also be referred to as a system-level chip, a system chip, a chip system, or an on-chip system chip.

It should be noted that, in this specification, the term "include", "comprise", or any other variant thereof is intended to cover a non-exclusive inclusion, so that a process, a method, an article, or an apparatus that includes a list of elements not only includes those elements but also includes other elements which are not expressly listed, or further includes elements inherent to such process, method, article, or apparatus. An element limited by "includes a ..." does not, without more constraints, preclude the presence of additional identical elements in the process, method, article, or apparatus that includes the element. In addition, it should be noted that the scope of the method and the apparatus in the embodiments of this application is not limited to performing functions in an illustrated or discussed sequence, and may further include performing functions in a basically simultaneous manner or in a reverse sequence according to the functions concerned. For example, the described method may be performed in an order different from that described, and the steps may be added, omitted, or combined. In addition, features described with reference to some examples may be combined in other examples.

Based on the descriptions of the foregoing implementations, a person skilled in the art may clearly understand that the method in the foregoing embodiment may be implemented by software in addition to a necessary universal hardware platform or by hardware only. In most circumstances, the former is a preferred implementation. Based on such an understanding, the technical solutions of this application essentially or the part contributing to the related art may be implemented in a form of a computer software product. The computer software product is stored in a storage medium (such as a ROM/RAM, a hard disk, or an optical disc), and includes several instructions for instructing a terminal (which may be a mobile phone, a computer, a server, a network device, or the like) to perform the methods described in the embodiments of this application.

The embodiments of this application are described above with reference to the accompanying drawings, but this application is not limited to the above specific implementations, and the above specific implementations are only illustrative and not restrictive. Under the enlightenment of this application, those of ordinary skill in the art can make many forms without departing from the purpose of this application and the protection scope of the claims, all of which fall within the protection of this application.

## Claims

1. A wallpaper interaction method, comprising:
displaying a target wallpaper, wherein the target wallpaper comprises a target element, and the target element is in a first shape;
receiving a first input; and
in response to the first input, enabling a first function, and updating a shape of the target element with a second shape corresponding to the first function.

2. The method according to claim 1, wherein in response to the first input, the enabling a first function comprises:
in a case that the first input is an input for the target element, starting an application function associated with the target element in response to the first input.

3. The method according to claim 1, wherein in a case that the target element comprises a first element and a second element, the first element is associated with a first account, and the second element is associated with a second account, after the displaying a target wallpaper, the method further comprises:
receiving a second input for the first element; and
in response to the second input, sending a first instruction to the second account through the first account, wherein the first instruction is used to instruct an electronic device corresponding to the second account to receive a target message or to instruct a shape of an element displayed on the wallpaper of the electronic device to be updated with a target shape.

4. The method according to claim 1, wherein the target element is in the first shape in a case that a screen is in a first state, and the target element is in the second shape in a case that the screen is in a second state, and in response to the first input, the enabling a first function, and updating a shape of the target element with a second shape comprises:
in response to the first input, changing a screen state to the second state, and updating the shape of the target element with the second shape.

5. The method according to claim 4, wherein in response to the first input, after the enabling a first function, and updating a shape of the target element with a second shape, the method further comprises:
receiving a third input; and
in response to the third input, changing the screen state to the first state, and updating the shape of the target element with the first shape.

6. A wallpaper interaction apparatus, comprising:
a display module, configured to display a target wallpaper, wherein the target wallpaper comprises a target element, and the target element is in a first shape;
a first receiving module, configured to receive a first input; and
a first response module, configured to: in response to the first input, enable a first function, and update a shape of the target element with a second shape corresponding to the first function.

7. The apparatus according to claim 6, wherein the first response module comprises:
a first response submodule, configured to: in a case that the first input is an input for the target element, start an application function associated with the target element in response to the first input.

8. The apparatus according to claim 6, wherein in a case that the target element comprises a first element and a second element, the first element is associated with a first account, and the second element is associated with a second account, the apparatus further comprises:
a second receiving module, configured to receive a second input for the first element; and
a second response module, configured to: in response to the second input, send a first instruction to the second account through the first account, wherein the first instruction is used to instruct an electronic device corresponding to the second account to receive a target message or to instruct a shape of an element displayed on the wallpaper of the electronic device to be updated with a target shape.

9. The apparatus according to claim 6, wherein the target element is in the first shape in a case that a screen is in a first state, and the target element is in the second shape in a case that the screen is in a second state; and the first response module comprises:
a second response submodule, configured to: in response to the first input, change a screen state to the second state, and update the shape of the target element with the second shape.

10. The apparatus according to claim 8, wherein the apparatus further comprises:
a third receiving module, configured to receive a third input; and
a third response module, configured to: in response to the third input, change the screen state to the first state, and update the shape of the target element with the first shape.

11. An electronic device, comprising a processor, a memory, and a program or an instruction stored in the memory and executable on the processor, wherein when the program or the instruction is executed by the processor, steps of the wallpaper interaction method according to any one of claims 1 to 5 are implemented.

12. A readable storage medium, wherein the readable storage medium stores a program or an instruction, and when the program or the instruction is executed by a processor, steps of the wallpaper interaction method according to any one of claims 1 to 5 are implemented.

13. A chip, comprising a processor and a communications interface, wherein the communications interface is coupled to the processor, and the processor is configured to run a program or an instruction, to implement steps of the wallpaper interaction method according to any one of claims 1 to 5.

14. A computer program product, wherein the computer program product is stored in a non-transitory readable storage medium, and the computer program product is executed by at least one processor to implement steps of the wallpaper interaction method according to any one of claims 1 to 5.

15. An electronic device, wherein the electronic device is configured to perform steps of the wallpaper interaction method according to any one of claims 1 to 5.
